(19) **Europäisches Patentamt / European Patent Office / Office européen des brevets**

(11) **EP 4 362 262 A1**

(12) # EUROPEAN PATENT APPLICATION
published in accordance with Art. 153(4) EPC

(43) Date of publication:
**01.05.2024 Bulletin 2024/18**

(21) Application number: **21946843.6**

(22) Date of filing: **09.12.2021**

(51) International Patent Classification (IPC):
**H02J 3/24** (2006.01)     **H02J 3/46** (2006.01)
**H02J 3/28** (2006.01)

(52) Cooperative Patent Classification (CPC):
**H02J 3/02; H02J 3/24; H02J 3/28; H02J 3/32;
H02J 3/38; H02J 3/46**

(86) International application number:
**PCT/CN2021/136625**

(87) International publication number:
**WO 2022/267369 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2021 CN 202110684557**

(71) Applicants:
• **Qingdao Haier Intelligent
  Technology R & D Co., Ltd.
  Qingdao, Shandong 266101 (CN)**

• **HAIER SMART HOME CO., LTD.
  Laoshan District
  Qingdao
  Shandong 266101 (CN)**

(72) Inventors:
• **YU, Guoxin
  Qingdao, Shandong 266101 (CN)**
• **LV, Nan
  Qingdao, Shandong 266101 (CN)**
• **LI, Jing
  Qingdao, Shandong 266101 (CN)**

(74) Representative: **HGF
HGF Limited
1 City Walk
Leeds LS11 9DX (GB)**

(54) **COMBINED HEAT AND POWER SUPPLY SYSTEM, AND ISLAND OPERATION CONTROL METHOD AND APPARATUS THEREFOR**

(57)     Provided are a combined heat and power supply system, and an island operation control method and apparatus therefor. The method includes the following: In S 1, the real-time heating temperature of the heat and power module, the real-time state of charge of the energy storage unit, and the direct current bus voltage parameter are acquired. In S2, the output power of the heat and power module is corrected according to at least one of the real-time heating temperature or the real-time state of charge to obtain the output power target value. In S3, a switch transistor of the unidirectional direct current conversion unit is controlled to be turned on or off according to the output power target value. In S4, a switch transistor of the bidirectional direct current conversion unit is controlled to be turned on or off according to the direct current bus voltage parameter.

S1 — Acquire the real-time heating temperature of the heat and power module, the real-time state of charge of the energy storage unit, and the direct current bus voltage parameter

S2 — Correct the output power of the heat and power module according to the real-time heating temperature and/or the real-time state of charge to obtain the output power target value

S3 — Control a switch transistor of the unidirectional direct current conversion unit to turn on or off according to the output power target value

S4 — Control a switch transistor of the bidirectional direct current conversion unit to turn on or off according to the direct current bus voltage parameter

**FIG. 1**

EP 4 362 262 A1

## Description

The present application claims priority to Chinese Patent Application No. 202110684557.1 filed Jun. 21, 2021, the disclosure of which is incorporated herein by reference in its entirety.

TECHNICAL FIELD

The present application relates to the technical field of residential power supply and heating, for example, a combined heat and power supply system, and an island operation control method and apparatus therefor.

BACKGROUND

As the global greenhouse effect becomes increasingly serious and energy mining becomes increasingly tense, popularizing the application of clean energy and improving energy utilization have become the focus of all industries.

In a residential power supply and heating system, power supply is mainly acquired from a power grid. In the case that the power grid does not provide power supply, a power supply mode of self-generation and power storage is generally adopted, while heating is achieved by means such as electric heating or combustion heat. The power supply system is relatively separated from the heating system, which results in a low energy utilization rate. The use of a combined heat and power supply system has high promotion value for improving the efficiency of residential heating and power supply.

In the combined heat and power supply system in related art, power supply and heating can be simultaneously achieved based on the renewability, high calorific value, high energy utilization rate, and other characteristics of a fuel cell system. The problem is that the combined heat and power supply system lacks an effective closed-loop control strategy. Moreover, when the combined heat and power supply system operates independently, the voltage and current on a user's load side and energy storage side cannot be adjusted, thereby making it difficult to ensure the stability and sustainability of system operation and resulting in poor user experience.

SUMMARY

The present application provides an island operation control method for a combined heat and power supply system, which can solve the problem that the combined heat and power supply system lacks an effective closed-loop control strategy and can improve the stability and sustainability of the combined heat and power supply system's operation.

An embodiment of the present application provides an island operation control method for a combined heat and power supply system. The combined heat and power supply system includes a heat and power module, a unidirectional direct current conversion unit, a bidirectional direct current conversion unit, an energy storage unit, and an inverter unit. The heat and power module is connected to a direct current bus through the unidirectional direct current conversion unit. The energy storage unit is connected to the direct current bus through the bidirectional direct current conversion unit. The control method includes acquiring the real-time heating temperature of the heat and power module, the real-time state of charge of the energy storage unit, and the direct current bus voltage parameter; correcting a output power of the heat and power module according to at least one of the real-time heating temperature or the real-time state of charge to obtain the output power target value; controlling a switch transistor of the unidirectional direct current conversion unit to turn on or off according to the output power target value; controlling a switch transistor of the bidirectional direct current conversion unit to turn on or off according to the direct current bus voltage parameter.

An embodiment of the present application also provides an island operation control apparatus for a combined heat and power supply system. The combined heat and power supply system includes a heat and power module, a unidirectional direct current conversion unit, a bidirectional direct current conversion unit, an energy storage unit, and an inverter unit. The heat and power module is connected to a direct current bus through the unidirectional direct current conversion unit. The energy storage unit is connected to the direct current bus through the bidirectional direct current conversion unit. The control apparatus includes a detection unit, a calculation unit, a first switch transistor drive unit, and a second switch transistor drive unit. The detection unit is configured to acquire the real-time heating temperature of the heat and power module, the real-time state of charge of the energy storage unit, and the direct current bus voltage parameter. The calculation unit is configured to correct an output power of the heat and power module according to at least one of the real-time heating temperature or the real-time state of charge to obtain an output power target value. The first switch transistor drive unit is configured to control a switch transistor of the unidirectional direct current conversion unit to turn on or off according to the output power target value. The second switch transistor drive unit is configured to control a switch transistor of the bidirectional direct current conversion unit to turn on or off according to the direct current bus voltage parameter.

An embodiment of the present application also provides a combined heat and power supply system. The system includes a heat and power module, a unidirectional direct current conversion unit, a bidirectional direct current conversion unit, an energy storage unit, an inverter unit, and the preceding island operation control apparatus for the combined heat and power supply system. The island operation control apparatus for the combined heat and power supply system is configured to monitor and control the operation state of the unidirectional direct current conversion unit, the bidirectional direct current conversion unit, and the inverter unit.

BRIEF DESCRIPTION OF DRAWINGS

FIG. 1 is a flowchart of an island operation control method for a combined heat and power supply system according to embodiment one of the present application.

FIG. 2 is a flowchart of another island operation control method for a combined heat and power supply system according to embodiment one of the present application.

FIG. 3 is a flowchart of another island operation control method for a combined heat and power supply system according to embodiment one of the present application.

FIG. 4 is a flowchart of another island operation control method for a combined heat and power supply system according to embodiment one of the present application.

FIG. 5 is a flowchart of another island operation control method for a combined heat and power supply system according to embodiment one of the present application.

FIG. 6 is a flowchart of another island operation control method for a combined heat and power supply system according to embodiment one of the present application.

FIG. 7 is a flowchart of another island operation control method for a combined heat and power supply system according to embodiment one of the present application.

FIG. 8 is a flowchart of another island operation control method for a combined heat and power supply system according to embodiment one of the present application.

FIG. 9 is a diagram illustrating the structure of an island operation control apparatus for a combined heat and power supply system according to embodiment two of the present application.

FIG. 10 is a block diagram illustrating an inverter unit control system according to embodiment two of the present application.

FIG. 11 is a block diagram illustrating a bidirectional direct current conversion unit control system according to embodiment two of the present application.

FIG. 12 is a block diagram illustrating a unidirectional direct current conversion unit control system according to embodiment two of the present application.

FIG. 13 is a diagram illustrating the structure of a combined heat and power supply system according to embodiment three of the present application.

DETAILED DESCRIPTION

Embodiment one

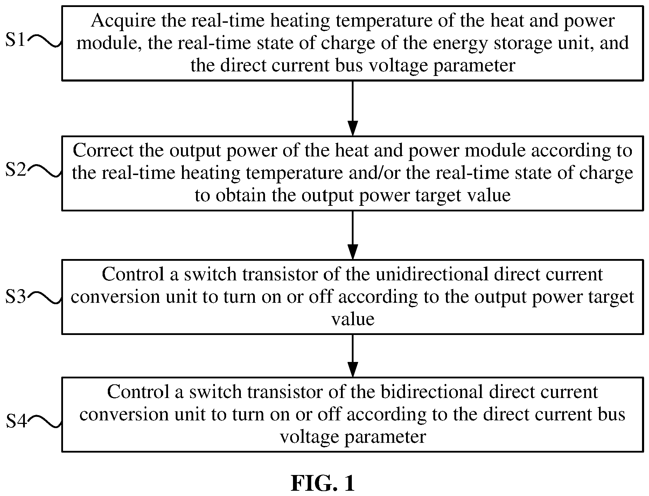

FIG. 1 is a flowchart of an island operation control method for a combined heat and power supply system according to embodiment one of the present application. This embodiment is applicable to a closed-loop control scenario of a fuel cell-based combined heat and power supply system in an island operation mode. The method may be executed by a functional module configured with a specific combined heat and power supply system software and hardware.

In this embodiment, the combined heat and power supply system includes a heat and power module, a unidirectional direct current conversion unit, a bidirectional direct current conversion unit, an energy storage unit, and an inverter unit; the heat and power module is connected to a direct current bus through the unidirectional direct current conversion unit; the energy storage unit is connected to the direct current bus through the bidirectional direct current conversion unit; the direct current bus is electrically connected to a user-side direct current power load; a direct current side of the inverter unit is electrically connected to the direct current bus; an alternating current side of the inverter unit is electrically connected to a user-side alternating current power load.

The heat and power module may be a fuel cell system where a clean energy source such as hydrogen or methane is used as a fuel. Such a fuel generates a high calorific value while generating electricity. Therefore, the combined heat and power supply system can achieve heating, alternating current power supply, and direct current power supply. In an island operation mode, the combined heat and power supply system may transmit self-generated power to the user side to supply power to the user load, transmit self-generated power to the energy storage unit for charging, and meanwhile, provide heat energy to the user for heating. The island operation mode refers to an operation mode that completely relies on the internal power of the combined heat and power supply system as the source of energy (including electric energy and heat energy) when no power is provided from the grid (such as grid failure or maintenance outage).

As shown in FIG. 1, the island operation control method for a combined heat and power supply system includes the following steps:

In S 1, the real-time heating temperature of the heat and power module, the real-time state of charge of the energy storage unit, and the direct current bus voltage parameter are acquired.

In this embodiment, the heat and power module may use a heat management unit to heat the water in a heating pipeline to provide heat, and the heating temperature may be acquired by detecting the temperature of the heated water in the heating pipeline.

In an embodiment, the energy storage unit may be a battery assembly, and the real-time state of charge of the energy storage unit may be collected by a power management system.

In S2, the output power of the heat and power module is corrected according to the real-time heating temperature Ty and the real-time state of charge Qy to obtain the output power target value $P_{ref}$.

In S3, a switch transistor of the unidirectional direct current conversion unit is controlled to be turned on or off according to the output power target value $P_{ref}$.

In this embodiment, by changing the output current of the heat and power module by the unidirectional direct current conversion unit, the output power of the heat and power module can follow the output power target value, so that the output power of the heat and power module tends to be the output power target value.

In S4, a switch transistor of the bidirectional direct current conversion unit is controlled to be turned on or off according to the direct current bus voltage parameter.

In this embodiment, the direct current bus is configured to transmit the direct current power supply voltage provided by the unidirectional direct current conversion unit and the bidirectional direct current conversion unit to the user-side direct current power load to provide direct current power supply to the power-consuming side. The correlation between the operation parameter of the direct current bus and the operation parameter of the energy storage unit is bound to control the bidirectional direct current conversion unit. In an embodiment, the direct current bus voltage parameter may include a target value $V_{dcref}$ of the direct current bus voltage and an actually measured value $V_c$ of the direct current bus voltage; the target value $V_{dcref}$ of the direct current bus voltage may be determined by the rated capacity of the energy storage unit.

In an embodiment, the heat and power module (for example, a fuel cell system) of the combined heat and power supply system is continuously operated based on the output power target value. On the one hand, heat energy is output to the outside to heat water in a heating pipeline, and on the other hand, electric energy is output to the outside. The output power of the heat and power module is positively related to the demand of the heating temperature and negatively related to the real-time state of charge of the energy storage unit. That is, the higher the user's demand for the heating temperature is, the higher the output power target value of the heat and power module is; the higher the real-time state of charge of the energy storage unit is, the lower the output power target value of the heat and power module is.

In the island operation mode, the demand on the user side may change, that is, the output power target value and the power consumption load may change. The real-time heating temperature Ty of the heating pipeline and the real-time state of charge Qy of the energy storage unit are collected in real time, the output power target value $P_{ref}$ actually required by the user is calculated according to the real-time heating temperature Ty and the real-time state of charge Qy, a switch transistor control signal is output to the unidirectional direct current conversion unit according to the output power target value $P_{ref}$ actually required by the user, and the output current of the heat and power module is changed so that the output power of the heat and power module follows the output power target value $P_{ref}$. Meanwhile, a switch transistor control signal is output to the bidirectional direct current conversion unit according to the target value $V_{dcref}$ of the direct current bus voltage and the actually measured value $V_{dc}$ of the direct current bus voltage so that the direct current bus voltage is kept stable. In this manner, the problem that the combined heat and power supply system lacks an effective closed-loop control strategy in the related art is solved, the changing heating temperature and the state of charge of the energy storage unit are fully utilized to adjust the output power of the heat and power module, and the direct current bus voltage parameter is utilized to adjust the on and off state of the bidirectional direct current conversion unit. Thus, not only the user's demand is satisfied, but also the energy utilization is improved, which is conducive to improving the stability and sustainability of the operation of the combined heat and power supply system and improving user experience.

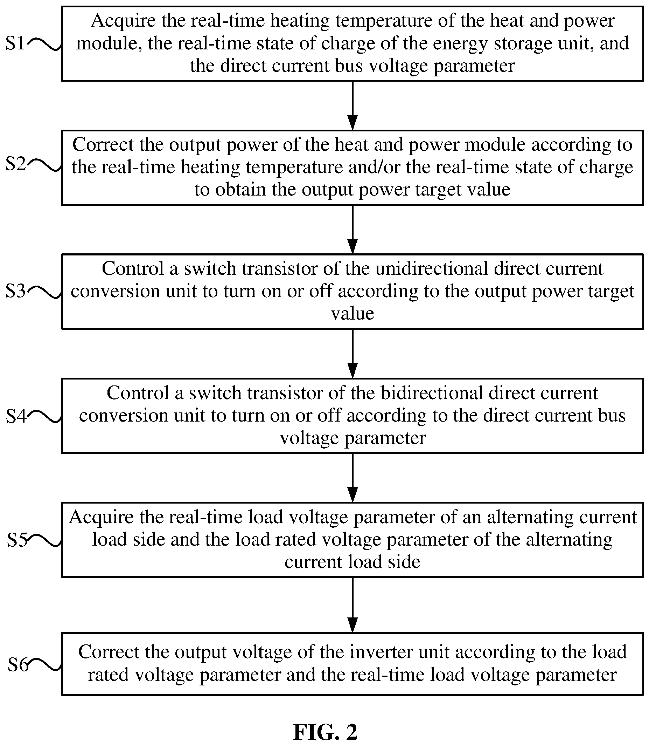

FIG. 2 is a flowchart of another island operation control method for a combined heat and power supply system according to embodiment one of the present application.

As shown in FIG. 2, the island operation control method for a combined heat and power supply system also includes the following steps:

In S5, the real-time load voltage parameter of an alternating current load side and the target load voltage parameter of the alternating current load side are acquired.

In an embodiment, the alternating current load may be a three-phase load, the real-time load voltage parameter may include a-phase real-time voltage parameter $V_{1a}$, b-phase real-time voltage parameter $V_{1b}$, and c-phase real-time voltage parameter $V_{1c}$, and the target load voltage parameter may include the effective value $V_{rms}$ of the load rated voltage.

In S6, the output voltage of the inverter unit is corrected according to the target load voltage parameter and the real-time load voltage parameter.

In an embodiment, coordinate conversion may be performed on the target load voltage parameter and the real-time load voltage parameter to obtain a voltage component in the same coordinate system, the actual value of the corresponding voltage component is compared with the target value, and the actual output voltage is corrected by the comparison result so that the output voltage of the inverter unit follows the alternating current load rated voltage, which is conducive to maintaining a stable supply of alternating current power.

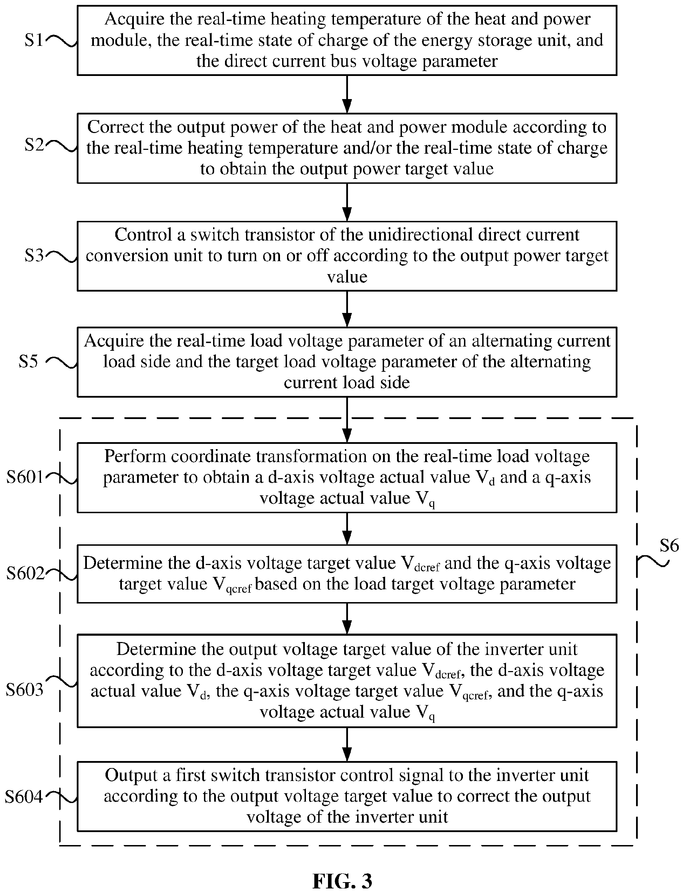

FIG. 3 is a flowchart of another island operation control method for a combined heat and power supply system according to embodiment one of the present application. FIG. 3 shows an example of preceding S6 but is not a limitation of S6.

As shown in FIG. 3, S6 includes the following steps:

In S601, coordinate transformation is performed on the real-time load voltage parameter to obtain a d-axis voltage actual value $V_d$ and a q-axis voltage actual value $V_q$.

In S602, the d-axis voltage target value $V_{dcref}$ and the q-axis voltage target value $V_{qcref}$ are determined based on the target load voltage parameter.

In an embodiment, the q-axis voltage target value $V_{qcref}$ may be configured to equal 0, and the d-axis voltage target value $V_{dcref}$ satisfies Formula 1 as shown below.

$$V_{dref} = \sqrt{\frac{2}{3}} * V_{rms} \quad \text{(Formula 1)}$$

$V_{rms}$ is the effective value of the load rated voltage.

In S603, the output voltage target value of the inverter unit is determined according to the d-axis target voltage value $V_{dcref}$, the d-axis actual voltage value $V_d$, the q-axis target voltage value $V_{qcref}$, and the q-axis actual voltage value $V_q$.

In S604, a first switch transistor control signal is output to the inverter unit according to the output voltage target value to correct the output voltage of the inverter unit.

In an embodiment, the output voltage target value of the inverter unit may include a d-axis component target value $V_{do}$ of the output voltage of the inverter unit and a q-axis component target value $V_{qo}$ of the output voltage of the inverter unit in a two-phase dq coordinate system and a-phase target value $V_{ao}$ of the output voltage of the inverter unit, b-phase target value $V_{bo}$ of the output voltage of the inverter unit, and c-phase target value $V_{co}$ of the output voltage of the inverter unit in a three-phase abc coordinate system.

In an embodiment, a three-phase to two-phase coordinate transformation may be performed on the a-phase real-time voltage parameter $V_{1a}$, b-phase real-time voltage parameter $V_{1b}$, and c-phase real-time voltage parameter $V_{1c}$ to obtain the d-axis voltage actual value $V_d$ and the q-axis voltage actual value $V_q$. The d-axis voltage difference between the d-axis voltage actual value $V_d$ and the d-axis voltage target value $V_{dref}$ is calculated, proportional and integral control is performed based on the d-axis voltage difference, and the d-axis component target value $V_{do}$ of the output voltage is calculated by proportional and integral operation. The q-axis voltage difference between the q-axis voltage actual value $V_q$ and the q-axis voltage target value $V_{qref}$ is calculated, proportional and integral control is performed based on the q-axis voltage difference, and the q-axis component target value $V_{qo}$ of the output voltage is calculated by proportional and integral operation. Two-phase to three-phase coordinate transformation is performed based on the d-axis component target value $V_{do}$ of the output voltage and the q-axis component target value $V_{qo}$ of the output voltage to obtain the a-phase target value $V_{ao}$ of the output voltage, b-phase target value $V_{bo}$ of the output voltage, and c-phase target value $V_{co}$ of the output voltage in a three-phase abc coordinate system. Moreover, pulse modulation is performed on the a-phase target value $V_{ao}$ of the output voltage, b-phase target value $V_{bo}$ of the output voltage, and c-phase target value $V_{co}$ of the output voltage to obtain a first switch transistor control signal. The first switch transistor control signal is used for controlling the switch transistor of the inverter unit to turn on or off so that the output voltage of the inverter unit follows the alternating current load rated voltage, which is beneficial to maintaining a stable supply of alternating current power.

In this embodiment, the angle θ required for three-phase to two-phase coordinate transformation and two-phase to three-phase coordinate transformation may be calculated by integrating the rated frequency value of the alternating current load voltage (for example, the rated frequency value may be 50 HZ).

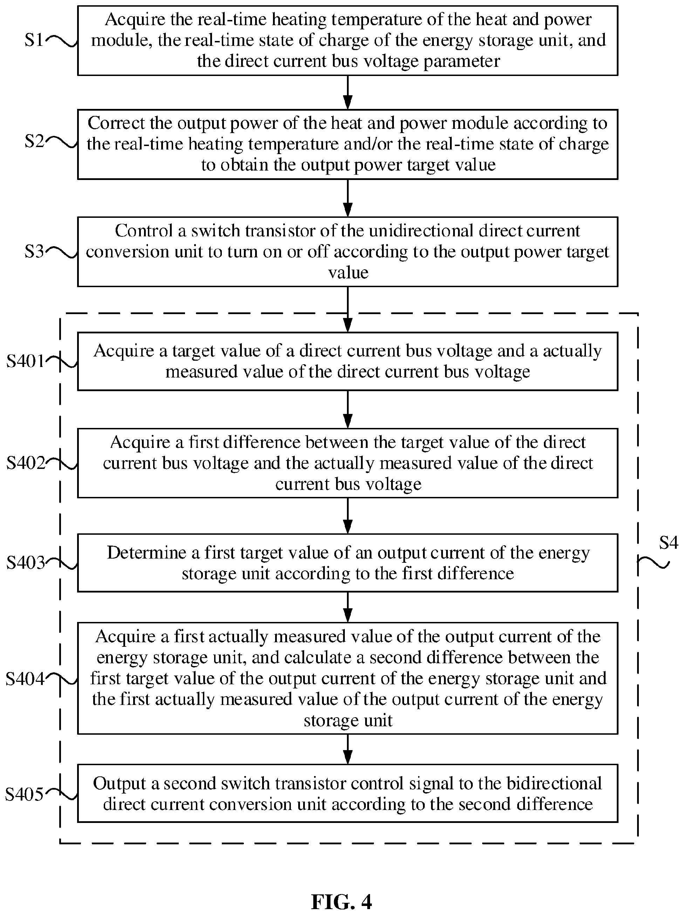

Optionally, FIG. 4 is a flowchart of another island operation control method for a combined heat and power supply system according to embodiment one of the present application. FIG. 4 shows an example of S4 but is not a limitation of S4.

As shown in FIG. 4, S4 includes the following steps.

In S401, the target value $V_{dcref}$ of the direct current bus voltage and the actually measured value $V_{dc}$ of the direct current bus voltage are acquired.

In S402, a first difference between the target value $V_{dcref}$ of the direct current bus voltage and the actually measured value $V_{dc}$ of the direct current bus voltage is acquired.

In S403, a first target value $i_{bref}$ of an output current of the energy storage unit is determined according to the first difference.

In S404, a first actually measured value $i_b$ of the output current of the energy storage unit is acquired, and a second difference between the first target value $i_{bref}$ of the output current of the energy storage unit and the first actually measured value $i_b$ of the output current of the energy storage unit is calculated.

In S405, a second switch transistor control signal is output to the bidirectional direct current conversion unit according to the second difference.

In a closed-loop control system of the bidirectional direct current conversion unit in an embodiment, proportional and integral control is performed on the direct current bus voltage based on the first difference between the target value $V_{dcref}$ of the direct current bus voltage and the actually measured value $V_{dc}$ of the direct current bus voltage, the target value of the output voltage of the energy storage unit is obtained by proportional and integral operation. The first target value $i_{bref}$ of the output current of the energy storage unit is calculated based on the discharge power of the energy storage unit and the target value of the output voltage of the energy storage unit, and proportional and integral control is performed on the output current based on the second difference between the first target value $i_{bref}$ of the output current of the energy storage unit and the first actually measured value $i_b$ of the output current of the energy storage unit. The final target value of the output current of the energy storage unit output after proportional and integral processing is compared with the user-side power supply current demand signal, and a second switch transistor control signal is output according to the comparison result. The second switch transistor control signal is used for controlling the switch transistor of the bidirectional direct current conversion unit to turn on or off so that the direct current bus voltage is kept stable, the stability of the direct current power supply is enhanced, and the quality of power supply is improved.

The power supply current demand signal in this embodiment may be a carrier signal, the carrier signal may be obtained by the power scheduling system according to the user-side demand, and this embodiment is not limited thereto.

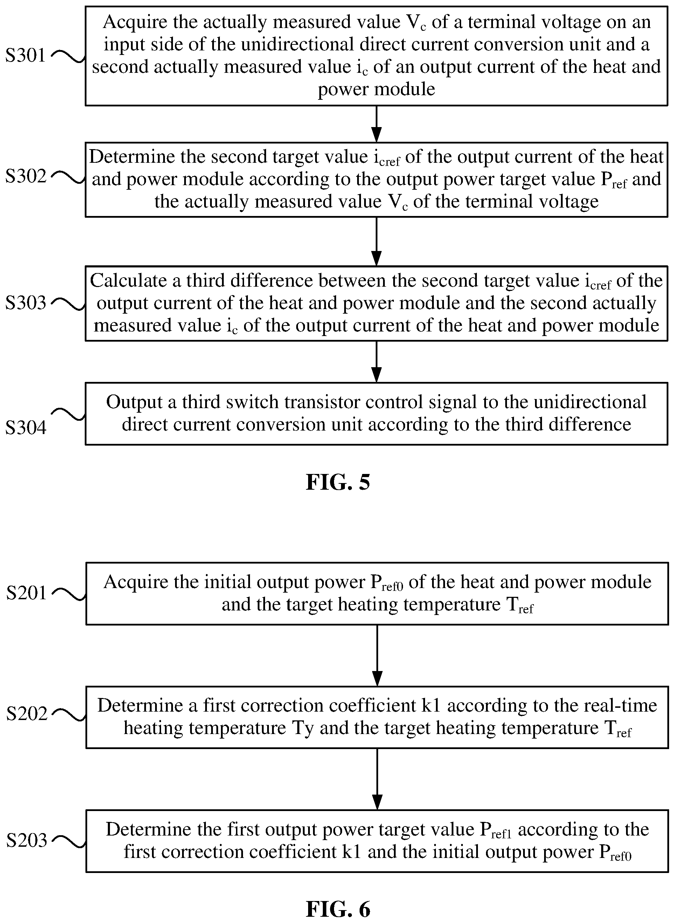

In an embodiment, FIG. 5 is a flowchart of another island operation control method for a combined heat and power supply system according to embodiment one of the present application. FIG. 5 shows an example of S3 but is not a limitation of S3.

As shown in FIG. 5, in S3, controlling the switch transistor of the unidirectional direct current conversion unit to turn on or off according to the output power target value includes the following steps.

In S301, the actually measured value $V_c$ of a terminal voltage on an input side of the unidirectional direct current conversion unit and a second actually measured value $i_c$ of an output current of the heat and power module are acquired.

In S302, the second target value $i_{cref}$ of the output current of the heat and power module is determined according to the output power target value $P_{ref}$ and the actually measured value $V_c$ of the terminal voltage.

In S303, a third difference between the second target value $i_{cref}$ of the output current of the heat and power module and the second actually measured value $i_c$ of the output current of the heat and power module is calculated.

In S304, a third switch transistor control signal is output to the unidirectional direct current conversion unit according to the third difference.

In an embodiment, the second target value $i_{cref}$ of the output current of the heat and power module is calculated according to the ratio obtained by dividing the output power target value $P_{ref}$ by the actually measured value $V_c$ of the terminal voltage. Proportional and integral control is performed on the output current of the heat and power module based on the third difference between the second target value $i_{cref}$ of the output current and the second actually measured value $i_c$ of the output current. The current signal output after proportional and integral processing is compared with the user-side power supply current demand signal, and the third switch transistor control signal is output according to the comparison result. The third switch transistor control signal is used for controlling the switch transistor of the unidirectional direct current conversion unit to turn on or off, and the output current of the heat and power module is changed. In this manner, the output power of the heat and power module follows the output power target value $P_{ref}$ to avoid excessive consumption or insufficient energy supply of the heat and power module. Thus, when the user's demand is satisfied, the energy utilization is improved, which is conducive to improving the stability and sustainability of the operation of the combined heat and power supply system and improving user experience.

FIG. 6 is a flowchart of another island operation control method for a combined heat and power supply system according to embodiment one of the present application. FIG. 6 shows an example where the output power of the heat and power module is corrected according to the real-time heating temperature Ty.

As shown in FIG. 6, correcting the output power of the heat and power module according to the real-time heating temperature Ty includes the following steps:

In S201, the initial output power $P_{ref0}$ of the heat and power module and the target heating temperature $T_{ref}$ are acquired.

In this embodiment, the initial output power $P_{ref}$ of the heat and power module during power-on operation may be a factory-set rated power of the heat and power module, and the target heating temperature $T_{ref}$ may be a heating temperature set by the user according to the actual heating demand; this embodiment is not limited thereto.

In S202, a first correction coefficient k1 is determined according to the real-time heating temperature Ty and the target heating temperature $T_{ref}$.

In S203, the first output power target value $P_{ref1}$ is determined according to the first correction coefficient k1 and the initial output power $P_{ref0}$.

In an embodiment, when the output power of the heat and power module is corrected according to the real-time heating temperature Ty, it is first determined whether the real-time heating temperature exceeds a preset heating temperature range. If the real-time heating temperature does not exceed the preset heating temperature range, the enable signal of power correction is 0, and the first correction coefficient is set to 1 so that the first output power target value $P_{ref1}$ is equal to the initial output power $P_{ref0}$, that is, the output power of the heat and power module is not corrected. If the real-time heating temperature exceeds the preset heating temperature range, where the preset heating temperature range may be adjusted according to the target heating temperature $T_{ref}$ or be a fixed value and no limitation is imposed thereto, the enable signal of power correction is 1, and the first correction coefficient k1 is determined according to the comparison result of the real-time heating temperature Ty and the target heating temperature $T_{ref}$.

When the real-time heating temperature Ty is higher than the upper limit threshold of the preset heating temperature range or lower than the lower limit threshold of the preset heating temperature range, the enable signal of power correction is set to 1, and the proportional and integral regulator starts to work. Proportional and integral control is performed on the temperature value based on the difference between the real-time heating temperature Ty and the target heating temperature $T_{ref}$, the first correction coefficient k1 is obtained by adding one to the output result of the proportional and integral regulator, the product of the first correction coefficient k1 and the initial output power $P_{ref0}$ is calculated to obtain the first output power target value $P_{ref1}$. The first output power target value $P_{ref1}$ is used as the final output power target value for closed-loop control of the unidirectional direct current conversion unit.

Illustratively, if the real-time heating temperature Ty is lower than the lower limit threshold of the preset heating temperature range, and the real-time heating temperature Ty is lower than the target heating temperature $T_{ref}$, the first correction coefficient k1 is greater than 1, and the output power target value is increased via the first correction coefficient k1. If the real-time heating temperature Ty is higher than the upper limit threshold of the preset heating temperature range, and the real-time heating temperature Ty is higher than the target heating temperature $T_{ref}$, the first correction coefficient k1 is less than 1, and the output power target value is decreased via the first correction coefficient k1. In this manner, the output power of the heat and power module follows the final output power target value, the final output power target value and the user's heating demand are in a one-to-one correspondence. Thus, not only the user's demand is satisfied, but also the energy utilization is improved, which is conducive to improving the stability and sustainability of the operation of the combined heat and power supply system and improving user experience.

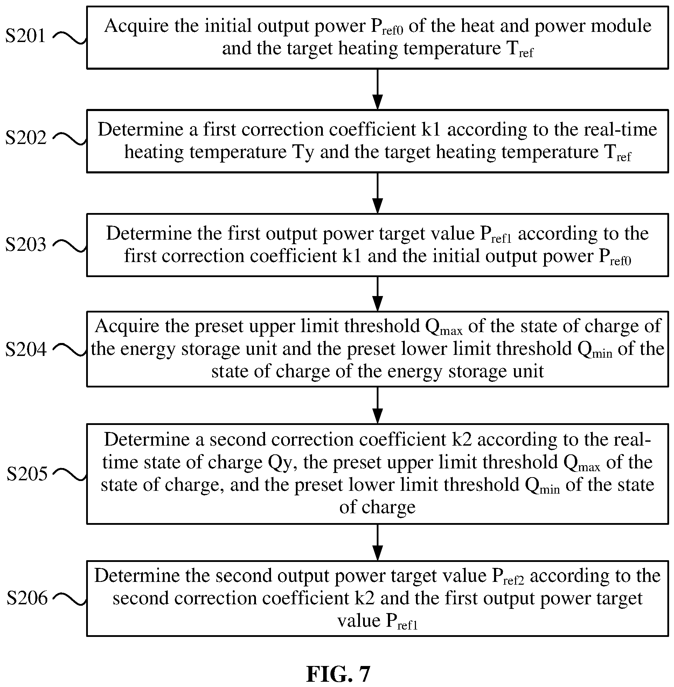

FIG. 7 is a flowchart of another island operation control method for a combined heat and power supply system according to embodiment one of the present application. FIG. 7 shows an example where the output power of the heat and power module is corrected according to the joint action of the real-time heating temperature Ty and the real-time state of charge Qy.

As shown in FIG. 7, based on the method steps shown in FIG. 6, correcting the output power of the heat and power module according to the real-time heating temperature Ty and the real-time state of charge Qy includes the following steps:

In S204, the preset upper limit threshold $Q_{max}$ of the state of charge of the energy storage unit and the preset lower limit threshold $Q_{min}$ of the state of charge of the energy storage unit are acquired.

In S205, a second correction coefficient k2 is determined according to the real-time state of charge Qy, the preset upper limit threshold $Q_{max}$ of the state of charge, and the preset lower limit threshold $Q_{min}$ of the state of charge.

In S206, the second output power target value $P_{ref2}$ is determined according to the second correction coefficient k2 and the first output power target value $P_{ref1}$.

In an embodiment, the first output power target value $P_{ref1}$ corrected by the first correction coefficient k1 is obtained by preceding S201 to S203, the second correction coefficient k2 is determined according to the comparison result of the real-time state of charge Qy, the preset upper limit threshold $Q_{max}$ of the state of charge, and the preset lower limit threshold $Q_{min}$ of the state of charge, the product of the second correction coefficient k2 and the first output power target value $P_{ref1}$ is calculated to obtain the second output power target value $P_{ref2}$, and the second output power target value $P_{ref2}$ is used as the final output power target value for closed-loop control of the unidirectional direct current conversion unit.

In an embodiment, the step of S205 includes: determining whether the real-time state of charge Qy is higher than the preset upper limit threshold $Q_{max}$ of the state of charge or whether the real-time state of charge Qy is lower than the preset lower limit threshold $Q_{min}$ of the state of charge; if the real-time state of charge Qy is higher than the preset upper limit threshold $Q_{max}$ of the state of charge, a first preset coefficient is determined as the second correction coefficient k2, and the preset flag bit is set to 1, and the first preset coefficient is smaller than 1; if the real-time state of charge Qy is lower than the preset lower limit threshold $Q_{min}$ of the state of charge, a second preset coefficient is determined as the second correction coefficient k2, and the preset flag bit is set to 1, and the second preset coefficient is greater than 1; if the real-time state of charge reaches half of the sum of the preset upper limit threshold of the state of charge and the preset lower limit threshold of the state of charge, a third preset coefficient is determined as the second correction coefficient k2, and the preset flag bit is reset to 0, where the preset flag bit is an enable flag bit of the current closed-loop control link.

Illustratively, the first preset coefficient may be configured to be equal to 0.9, the second preset coefficient may be configured to be equal to 1.1, and the third preset coefficient may be configured to be equal to 1.

In an embodiment, the real-time state of charge $Q_y$ of the energy storage unit is collected in real time in the island operation mode; if the real-time state of charge $Q_y$ is lower than the preset upper limit threshold $Q_{max}$ of the state of charge and higher than the preset lower limit threshold $Q_{min}$ of the state of charge, the second correction coefficient k2 is set to 1. In this case, the output power of the heat and power module does not need to be corrected according to the real-time state of charge $Q_y$ of the energy storage unit. If the real-time state of charge $Q_y$ is higher than the preset upper limit threshold $Q_{max}$ of the state of charge, the preset flag bit is set to 1, the second correction coefficient k2 is set to a first preset coefficient smaller than 1, and the output power of the heat and power module is corrected according to the real-time state of charge $Q_y$ so that the output power of the heat and power module is smaller than the electric power consumed by the user's load side. In this case, the energy storage unit is working in a discharge state, and the energy storage unit and the heat and power module together supply power to the user. In the discharge process, the real-time state of charge $Q_y$ of the energy storage unit gradually decreases. When the real-time state of charge $Q_y$ decreases to $(Q_{min} + Q_{max}) / 2$, the preset flag bit is reset to 0, and the second correction coefficient k2 is set to 1, that is, the output power of the heat and power module is not corrected according to the real-time state of charge $Q_y$ of the energy storage unit.

If the real-time state of charge $Q_y$ is lower than the preset lower limit threshold $Q_{min}$ of the state of charge, the preset flag bit is set to 1, the second correction coefficient k2 is set to a first preset coefficient greater than 1, and the output power of the heat and power module is corrected according to the real-time state of charge $Q_y$ so that the output power of the heat and power module is greater than the electric power consumed by the user's load side. In this case, the energy storage unit is working in a charge state, part of the electric energy output by the heat and power module is provided to the user, and other part of the electric energy is transmitted to the energy storage unit for storage. In the charge process, the real-time state of charge $Q_y$ of the energy storage unit gradually increases. When the real-time state of charge $Q_y$ increases to $(Q_{min} + Q_{max}) / 2$, the preset flag bit is reset to 0, and the second correction coefficient k2 is set to 1, that is, the output power of the heat and power module is not corrected according to the real-time state of charge $Q_y$ of the energy storage unit.

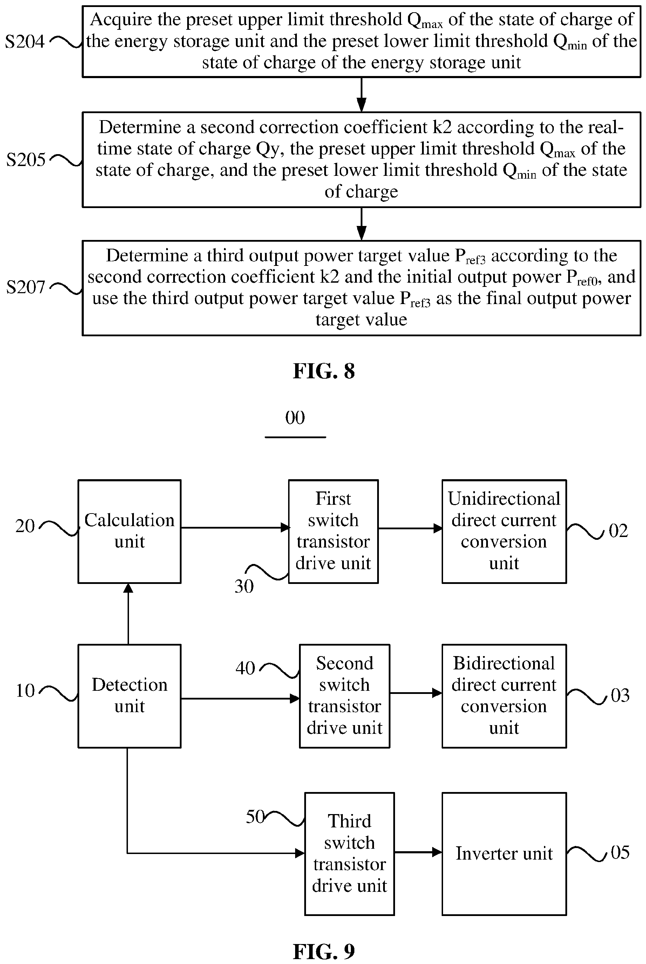

FIG. 8 is a flowchart of another island operation control method for a combined heat and power supply system according to embodiment one of the present application. FIG. 8 shows an example where the output power of the heat and power module is corrected according to the real-time state of charge $Q_y$.

As shown in FIG. 8, correcting the output power of the heat and power module according to the real-time state of charge $Q_y$ includes the following steps.

In S204, the preset upper limit threshold $Q_{max}$ of the state of charge of the energy storage unit and the preset lower limit threshold $Q_{min}$ of the state of charge of the energy storage unit are acquired.

In S205, a second correction coefficient k2 is determined according to the real-time state of charge $Q_y$, the preset upper limit threshold $Q_{max}$ of the state of charge, and the preset lower limit threshold $Q_{min}$ of the state of charge.

In S207, a third output power target value $P_{ref3}$ is determined according to the second correction coefficient k2 and the initial output power $P_{ref0}$, and the third output power target value $P_{ref3}$ is used as the final output power target value for closed-loop control of the unidirectional direct current conversion unit.

In an embodiment, the specific method where a second correction coefficient k2 is determined according to the real-time state of charge $Q_y$, the preset upper limit threshold $Q_{max}$ of the state of charge, and the preset lower limit threshold $Q_{min}$ of the state of charge is the same as the method described in the preceding embodiments and is not repeated herein.

In this manner, the output power target value $P_{ref}$ actually required by the user is calculated via the real-time heating temperature $T_y$ and the real-time state of charge $Q_y$, the switch transistor control signal is output to the unidirectional direct current conversion unit according to the output power target value $P_{ref}$ actually required by the user, and the output current of the heat and power module is changed so that the output power of the heat power module follows the final output power target value $P_{ref}$. In this manner, the problem that the combined heat and power supply system lacks an effective closed-loop control strategy in the related art is solved, and the changing heating temperature and the state of charge of the energy storage unit are fully utilized to adjust the output power of the heat and power module. Thus, not only the user's demand is satisfied, but also the energy utilization is improved, which is conducive to improving the stability and sustainability of the operation of the combined heat and power supply system and improving user experience.

Embodiment two

Based on the preceding embodiments, embodiment two of the present application provides an island operation control apparatus for a combined heat and power supply system. The island operation control apparatus for a combined heat and power supply system according to this embodiment of the present application may execute the island operation control method for a combined heat and power supply system according to any embodiment of the present application and has functional modules and beneficial effects corresponding to the execution of the method.

FIG. 9 is a diagram illustrating the structure of an island operation control apparatus for a combined heat and power supply system according to embodiment two of the present application.

In this embodiment, as shown in FIG. 9, the combined heat and power supply system includes a heat and power module (not shown in FIG. 9), a unidirectional direct current conversion unit 02, a bidirectional direct current conversion unit 03, an energy storage unit (not shown in FIG. 9), and an inverter unit 05; the heat and power module is connected to a direct current bus through the unidirectional direct current conversion unit 02; the energy storage unit is connected to the direct current bus through the bidirectional direct current conversion unit 03; the direct current bus is electrically connected to a user-side direct current power load; a direct current side of the inverter unit 05 is electrically connected to the direct current bus; an alternating current side of the inverter unit 05 is electrically connected to a user-side alternating current power load. Therefore, the combined heat and power supply system can achieve alternating current power supply and direct current power supply in the island operation mode.

As shown in FIG. 9, the island operation control apparatus 00 for a combined heat and power supply system includes a detection unit 10, a calculation unit 20, a first switch transistor drive unit 30, and a second switch transistor drive unit 40. The detection unit 10 is configured to acquire the real-time heating temperature Ty of the heat and power module, the real-time state of charge Qy of the energy storage unit, and the direct current bus voltage parameter. The calculation unit 20 is configured to correct the output power of the heat and power module according to at least one of the real-time heating temperature Ty or the real-time state of charge Qy to obtain the output power target value. The first switch transistor drive unit 30 is configured to control a switch transistor of the unidirectional direct current conversion unit 02 to turn on or off according to the output power target value. The second switch transistor drive unit 40 is configured to control a switch transistor of the bidirectional direct current conversion unit 03 to turn on or off according to the direct current bus voltage parameter.

In an embodiment, as shown in FIG. 9, the island operation control apparatus 00 for a combined heat and power supply system also includes a third switch transistor drive unit 50. The third switch transistor drive unit 50 is configured to correct the output voltage of the inverter unit 05 according to the target load voltage parameter and the real-time load voltage parameter so that the output voltage of the inverter unit 05 follows the rated voltage of the alternating current load.

The control system of the unidirectional direct current conversion unit 02, the bidirectional direct current conversion unit 03, and the inverter unit 05 are described in detail with reference to drawings.

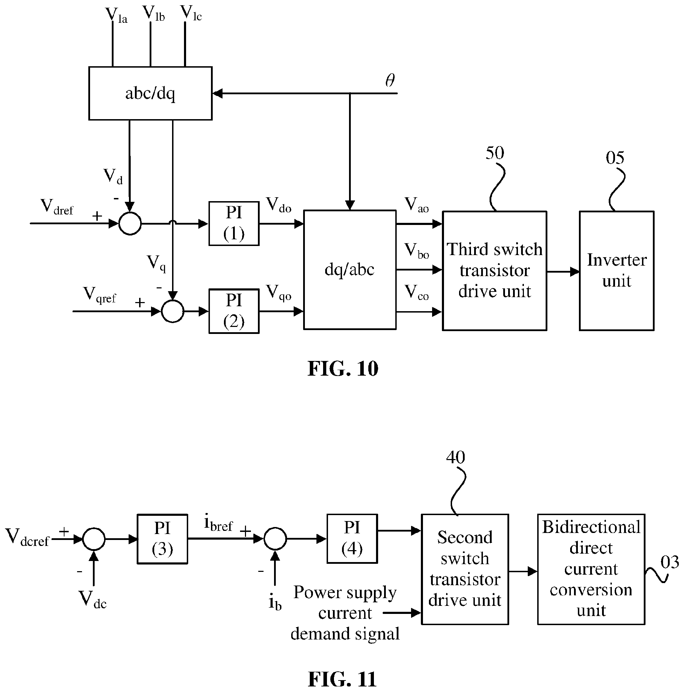

FIG. 10 is a block diagram illustrating an inverter unit control system according to embodiment two of the present application.

In an embodiment, with reference to FIGS. 9 and 10, the island operation control apparatus 00 for a combined heat and power supply system also includes a first PI regulator PI (1), a second PI regulator PI (2), a three phase to two phase converter abc/dq, and a two phase to three phase converter dq/abc. The three phase to two phase converter abc/dq is configured to perform coordinate transformation on the real-time load voltage parameter (for example, a-phase real-time voltage parameter $V_{1a}$, b-phase real-time voltage parameter $V_{1b}$, and c-phase real-time voltage parameter $V_{1c}$) to obtain the d-axis voltage actual value $V_d$ and the q-axis voltage actual value $V_q$. The first PI regulator PI (1) is configured to determine the d-axis component target value $V_{do}$ of the output voltage of the inverter unit 05 based on the d-axis voltage target value $V_{dref}$ and the d-axis voltage actual value $V_d$. The second PI regulator PI (2) is configured to determine the q-axis component target value $V_{qo}$ of the output voltage of the inverter unit 05 according to the q-axis voltage target value $V_{qref}$ and the q-axis voltage actual value $V_q$. The two phase to three phase converter dq/abc is configured to perform coordinate transformation on the d-axis component target value $V_{do}$ of the output voltage to obtain the a-phase target value $V_{ao}$ of the output voltage, the b-phase target value $V_{bo}$ of the output voltage, and the c-phase target value $V_{co}$ of the output voltage in the three-phase abc coordinate system. The third switch transistor drive unit 50 outputs a first switch transistor control signal to the inverter unit 05 according to the a-phase target value $V_{ao}$ of the output voltage, b-phase target value $V_{bo}$ of the output voltage, and c-phase target value $V_{co}$ of the output voltage in the three-phase abc coordinate system.

FIG. 11 is a block diagram illustrating a bidirectional direct current conversion unit control system according to embodiment two of the present application.

In an embodiment, with reference to FIGS. 9 and 11, the island operation control apparatus 00 for a combined heat and power supply system also includes a third PI regulator PI (3) and a fourth PI regulator PI (4). The third PI regulator PI (3) is configured to determine the first target value of the output current of the energy storage unit based on a first difference between the target value of the direct current bus voltage and the actually measured value of the direct current bus voltage. The fourth PI regulator PI (4) is configured to perform proportional and integral control based on a second difference between the first target value and the first actually measured value of the output current to obtain the final output current target value so that the second switch transistor drive unit 40 outputs a second switch transistor control signal to the bidirectional direct current conversion unit according to the final output current target value.

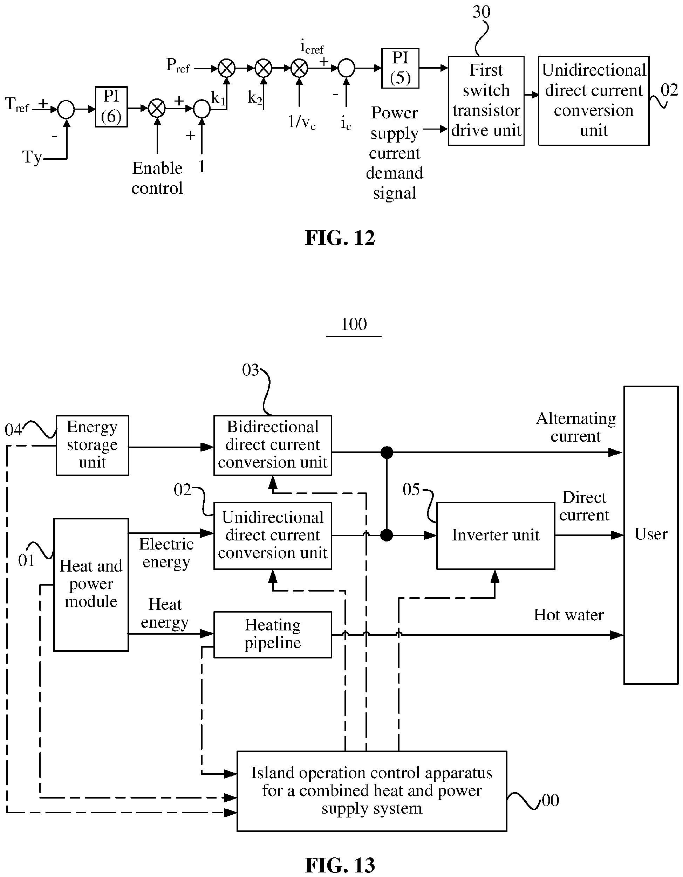

FIG. 12 is a block diagram illustrating a unidirectional direct current conversion unit control system according to embodiment two of the present application.

With reference to FIGS. 9 and 12, the island operation control apparatus 00 for a combined heat and power supply system also includes a fifth PI regulator PI (5); the calculation unit 50 is also configured to: acquire the actually measured value $V_c$ of a terminal voltage on an input side of the unidirectional direct current conversion unit and a second actually measured value $i_c$ of an output current of the heat and power module, and determine the second target value $i_{cref}$ of the output current of the heat and power module according to the output power target value $P_{ref}$ and the actually measured value $V_c$ of the terminal voltage; the fifth PI regulator PI (5) is configured to perform proportional and integral control based on a third difference between the second target value $i_{cref}$ and the second actually measured value $i_c$ to output the final current target value so that the first switch transistor drive unit outputs a third switch transistor control signal to the unidirectional direct current conversion unit 02 according to the final current target value and the user-side power supply current demand signal.

In an embodiment, with reference to FIGS. 9 and 12, the island operation control apparatus 00 for a combined heat and power supply system also includes a sixth PI regulator PI (6), the sixth PI regulator PI (6) is configured to perform proportional and integral control based on the real-time heating temperature $T_y$ and the target heating temperature $T_{ref}$ so that the calculation unit 20 determines a first correction coefficient k1 based on the output value of the sixth PI regulator PI (6) and determines the first output power target value based on the first correction coefficient and the initial output power.

In an embodiment, the calculation unit 20 is also configured to acquire the preset upper limit threshold $Q_{max}$ of the state of charge of the energy storage unit and the preset lower limit threshold $Q_{min}$ of the state of charge of the energy storage unit; determine a second correction coefficient k2 according to the real-time state of charge Qy, the preset upper limit threshold $Q_{max}$ of the state of charge and the preset lower limit threshold $Q_{min}$ of the state of charge; and determine the second output power target value according to the second correction coefficient k2 and the first output power target value, or, determine the third output power target value according to the second correction coefficient k2 and the initial output power.

In an embodiment, the calculation unit 20 is also configured to determine whether the real-time state of charge Qy is higher than the preset upper limit threshold $Q_{max}$ of the state of charge or whether the real-time state of charge Qy is lower than the preset lower limit threshold $Q_{min}$ of the state of charge; if the real-time state of charge Qy is higher than the preset upper limit threshold $Q_{max}$ of the state of charge, the calculation unit 20 is configured to determine a first preset coefficient k1 as the second correction coefficient, and set the preset flag bit to 1, where the first preset coefficient k1 is smaller than 1; if the real-time state of charge Qy is lower than the preset lower limit threshold $Q_{min}$ of the state of charge, the calculation unit 20 is configured to determine a second preset coefficient k2 as the second correction coefficient, and set the preset flag bit to 1, wherein the second preset coefficient k2 is greater than 1; if the real-time state of charge Qy reaches half of the sum of the preset upper limit threshold $Q_{max}$ of the state of charge and the preset lower limit threshold $Q_{min}$ of the state of charge, the calculation unit 20 is configured to determine a third preset coefficient as the second correction coefficient k2, and reset the preset flag bit to 0, where the third preset coefficient is greater than the first preset coefficient and less than the second preset coefficient.

Therefore, the island operation control apparatus for a combined heat and power supply system according to this embodiment of the present application executes the island operation control method. The control method includes acquiring the real-time heating temperature of the heat and power module, the real-time state of charge of the energy storage unit, and the direct current bus voltage parameter; correcting the output power of the heat and power module according to at least one of the real-time heating temperature or the real-time state of charge to obtain the output power target value; controlling a switch transistor of the unidirectional direct current conversion unit to turn on or off according to the output power target value; controlling a switch transistor of the bidirectional direct current conversion unit to turn on or off according to the direct current bus voltage parameter. In this manner, the problem that the combined heat and power supply system lacks an effective closed-loop control strategy in the related art is solved, the changing heating temperature and the state of charge of the energy storage unit are fully utilized to adjust the output power of the heat and power module, and the direct current bus voltage parameter is utilized to adjust the on and off state of the bidirectional direct current conversion unit. Thus, not only the user's demand is satisfied, but also the energy utilization is improved, which is conducive to improving the stability and sustainability of the operation of the combined heat and power supply system and improving user experience.

Embodiment three

FIG. 13 is a diagram illustrating the structure of a combined heat and power supply system according to embodiment three of the present application.

As shown in FIG. 13, the combined heat and power supply system includes a heat and power module 01, a unidirectional direct current conversion unit 02, a bidirectional direct current conversion unit 03, an energy storage unit 04, an inverter unit 05, and the preceding island operation control apparatus 00 for the combined heat and power supply system; the island operation control apparatus for the combined heat and power supply system is configured to monitor and control the operation state of the unidirectional direct current conversion unit, the bidirectional direct current conversion unit, and the inverter unit.

The combined heat and power supply system according to this embodiment of the present application is provided with an island operation control apparatus that executes an island operation control method. The method includes acquiring the real-time heating temperature of the heat and power module, the real-time state of charge of the energy storage unit, and the direct current bus voltage parameter; correcting the output power of the heat and power module according to at least one of the real-time heating temperature or the real-time state of charge to obtain the output power target value; controlling a switch transistor of the unidirectional direct current conversion unit to turn on or off according to the output power target value; controlling a switch transistor of the bidirectional direct current conversion unit to turn on or off according to the direct current bus voltage parameter. In this manner, the problem that the combined heat and power supply system lacks an effective closed-loop control strategy in the related art is solved, the changing heating temperature and the state of charge of the energy storage unit are fully utilized to adjust the output power of the heat and power module, and the direct current bus voltage parameter is utilized to adjust the on and off state of the bidirectional direct current conversion unit. Thus, not only the user's demand is satisfied, but also the energy utilization is improved, which is conducive to improving the stability and sustainability of the operation of the combined heat and power supply system and improving user experience.

**Claims**

1. An island operation control method for a combined heat and power supply system, wherein the combined heat and power supply system comprises a heat and power module, a unidirectional direct current conversion unit, a bidirectional direct current conversion unit, an energy storage unit, and an inverter unit, wherein the heat and power module is connected to a direct current bus through the unidirectional direct current conversion unit, and the energy storage unit is connected to the direct current bus through the bidirectional direct current conversion unit; and the control method comprises:

   acquiring a real-time heating temperature of the heat and power module, a real-time state of charge of the energy storage unit, and a direct current bus voltage parameter;
   correcting an output power of the heat and power module according to at least one of the real-time heating temperature or the real-time state of charge to obtain an output power target value;
   controlling a switch transistor of the unidirectional direct current conversion unit to turn on or off according to the output power target value; and
   controlling a switch transistor of the bidirectional direct current conversion unit to turn on or off according to the direct current bus voltage parameter.

2. The island operation control method for the combined heat and power supply system of claim 1, further comprising:

   acquiring a real-time load voltage parameter of an alternating current load side and a target load voltage parameter of the alternating current load side; and
   correcting an output voltage of the inverter unit according to the target load voltage parameter and the real-time load voltage parameter.

3. The island operation control method for the combined heat and power supply system of claim 2, wherein correcting the output voltage of the inverter unit according to the target load voltage parameter and the real-time load voltage comprises:

   performing coordinate transformation on the real-time load voltage parameter to obtain a d-axis voltage actual value and a q-axis voltage actual value;
   determining, based on the target load voltage parameter, a d-axis voltage target value and a q-axis voltage target value;
   determining an output voltage target value of the inverter unit according to the d-axis voltage target value, the d-axis voltage actual value, the q-axis voltage target value, and the q-axis voltage actual value; and
   outputting a first switch transistor control signal to the inverter unit according to the output voltage target value.

4. The island operation control method for the combined heat and power supply system of claim 1, wherein controlling the switch transistor of the bidirectional direct current conversion unit to turn on or off according to the direct current bus voltage parameter comprises:

   acquiring a target value of a direct current bus voltage and an actually measured value of the direct current bus voltage;
   acquiring a first difference between the target value of the direct current bus voltage and the actually measured value of the direct current bus voltage;
   determining a first target value of an output current of the energy storage unit according to the first difference;
   acquiring a first actually measured value of the output current of the energy storage unit, and calculating a second difference between the first target value of the output current of the energy storage unit and the first actually measured value of the output current of the energy storage unit; and

outputting a second switch transistor control signal to the bidirectional direct current conversion unit according to the second difference.

5. The island operation control method for the combined heat and power supply system of claim 1, wherein controlling the switch transistor of the unidirectional direct current conversion unit to turn on or off according to the output power target value comprises:

acquiring an actually measured value of a terminal voltage on an input side of the unidirectional direct current conversion unit and a second actually measured value of an output current of the heat and power module;

determining a second target value of the output current of the heat and power module according to the output power target value and the actually measured value of the terminal voltage;

calculating a third difference between the second target value of the output current of the heat and power module and the second actually measured value of the output current of the heat and power module; and

outputting a third switch transistor control signal to the unidirectional direct current conversion unit according to the third difference.

6. The island operation control method for the combined heat and power supply system of claim 1, wherein correcting the output power of the heat and power module according to the at least one of the real-time heating temperature or the real-time state of charge to obtain the output power target value comprises:

acquiring initial output power of the heat and power module and a target heating temperature;

determining a first correction coefficient according to the real-time heating temperature and the target heating temperature; and

determining a first output power target value according to the first correction coefficient and the initial output power.

7. The island operation control method for the combined heat and power supply system of claim 6, wherein correcting the output power of the heat and power module according to the at least one of the real-time heating temperature or the real-time state of charge further comprises:

acquiring a preset upper limit threshold of a state of charge of the energy storage unit and a preset lower limit threshold of the state of charge of the energy storage unit;

determining a second correction coefficient according to the real-time state of charge, the preset upper limit threshold of the state of charge, and the preset lower limit threshold of the state of charge; and

determining a second output power target value according to the second correction coefficient and the first output power target value; or, determining a third output power target value according to the second correction coefficient and the initial output power.

8. The island operation control method for the combined heat and power supply system of claim 7, wherein determining the second correction coefficient according to the real-time state of charge, the preset upper limit threshold of the state of charge, and the preset lower limit threshold of the state of charge comprises:

determining whether the real-time state of charge is higher than the preset upper limit threshold of the state of charge or whether the real-time state of charge is lower than the preset lower limit threshold of the state of charge;

determining a first preset coefficient as the second correction coefficient and setting a preset flag bit to 1 if the real-time state of charge is higher than the preset upper limit threshold of the state of charge, wherein the first preset coefficient is less than 1;

determining a second preset coefficient as the second correction coefficient and setting the preset flag bit to 1 if the real-time state of charge is lower than the preset lower limit threshold of the state of charge, wherein the second preset coefficient is greater than 1; and

determining a third preset coefficient as the second correction coefficient and resetting the preset flag bit to 0 if the real-time state of charge reaches half of a sum of the preset upper limit threshold of the state of charge and the preset lower limit threshold of the state of charge, wherein the third preset coefficient is greater than the first preset coefficient and less than the second preset coefficient.

9. An island operation control apparatus for a combined heat and power supply system, wherein the combined heat and power supply system comprises a heat and power module, a unidirectional direct current conversion unit, a bidirectional direct current conversion unit, an energy storage unit, and an inverter unit, wherein the heat and power module is connected to a direct current bus through the unidirectional direct current conversion unit, and the energy storage unit is connected to the direct current bus through the bidirectional direct current conversion unit; and the control apparatus comprises:

a detection unit configured to acquire a real-time heating temperature of the heat and power module, a real-time state of charge of the energy storage unit, and a direct current bus voltage parameter;

a calculation unit configured to correct output power of the heat and power module according to at least one of the real-time heating temperature or the real-time state of charge to obtain an output power target value;

a first switch transistor drive unit configured to control a switch transistor of the unidirectional direct current conversion unit to turn on or off according to the output power target value; and

a second switch transistor drive unit configured to control a switch transistor of the bidirectional direct current conversion unit to turn on or off according to the direct current bus voltage parameter.

10. A combined heat and power supply system, comprising: a heat and power module, a unidirectional direct current conversion unit, a bidirectional direct current conversion unit, an energy storage unit, an inverter unit, and the island operation control apparatus for the combined heat and power supply system of claim 9, wherein the island operation control apparatus for the combined heat and power supply system is configured to monitor and control an operation state of the unidirectional direct current conversion unit, the bidirectional direct current conversion unit, and the inverter unit.

| | Acquire the real-time heating temperature of the heat and power module, the real-time state of charge of the energy storage unit, and the direct current bus voltage parameter |
|---|---|
| S1 | |

| | Correct the output power of the heat and power module according to the real-time heating temperature and/or the real-time state of charge to obtain the output power target value |
|---|---|
| S2 | |

| | Control a switch transistor of the unidirectional direct current conversion unit to turn on or off according to the output power target value |
|---|---|
| S3 | |

| | Control a switch transistor of the bidirectional direct current conversion unit to turn on or off according to the direct current bus voltage parameter |
|---|---|
| S4 | |

**FIG. 1**

| S1 | Acquire the real-time heating temperature of the heat and power module, the real-time state of charge of the energy storage unit, and the direct current bus voltage parameter |
|---|---|

| S2 | Correct the output power of the heat and power module according to the real-time heating temperature and/or the real-time state of charge to obtain the output power target value |
|---|---|

| S3 | Control a switch transistor of the unidirectional direct current conversion unit to turn on or off according to the output power target value |
|---|---|

| S4 | Control a switch transistor of the bidirectional direct current conversion unit to turn on or off according to the direct current bus voltage parameter |
|---|---|

| S5 | Acquire the real-time load voltage parameter of an alternating current load side and the load rated voltage parameter of the alternating current load side |
|---|---|

| S6 | Correct the output voltage of the inverter unit according to the load rated voltage parameter and the real-time load voltage parameter |
|---|---|

**FIG. 2**

S1 — Acquire the real-time heating temperature of the heat and power module, the real-time state of charge of the energy storage unit, and the direct current bus voltage parameter

S2 — Correct the output power of the heat and power module according to the real-time heating temperature and/or the real-time state of charge to obtain the output power target value

S3 — Control a switch transistor of the unidirectional direct current conversion unit to turn on or off according to the output power target value

S5 — Acquire the real-time load voltage parameter of an alternating current load side and the target load voltage parameter of the alternating current load side

S601 — Perform coordinate transformation on the real-time load voltage parameter to obtain a d-axis voltage actual value $V_d$ and a q-axis voltage actual value $V_q$

S602 — Determine the d-axis voltage target value $V_{dcref}$ and the q-axis voltage target value $V_{qcref}$ based on the load target voltage parameter

S603 — Determine the output voltage target value of the inverter unit according to the d-axis voltage target value $V_{dcref}$, the d-axis voltage actual value $V_d$, the q-axis voltage target value $V_{qcref}$, and the q-axis voltage actual value $V_q$

S604 — Output a first switch transistor control signal to the inverter unit according to the output voltage target value to correct the output voltage of the inverter unit

S6

**FIG. 3**

S1 — Acquire the real-time heating temperature of the heat and power module, the real-time state of charge of the energy storage unit, and the direct current bus voltage parameter

S2 — Correct the output power of the heat and power module according to the real-time heating temperature and/or the real-time state of charge to obtain the output power target value

S3 — Control a switch transistor of the unidirectional direct current conversion unit to turn on or off according to the output power target value

S401 — Acquire a target value of a direct current bus voltage and a actually measured value of the direct current bus voltage

S402 — Acquire a first difference between the target value of the direct current bus voltage and the actually measured value of the direct current bus voltage

S403 — Determine a first target value of an output current of the energy storage unit according to the first difference

S404 — Acquire a first actually measured value of the output current of the energy storage unit, and calculate a second difference between the first target value of the output current of the energy storage unit and the first actually measured value of the output current of the energy storage unit

S405 — Output a second switch transistor control signal to the bidirectional direct current conversion unit according to the second difference

S4

**FIG. 4**

| S301 | Acquire the actually measured value $V_c$ of a terminal voltage on an input side of the unidirectional direct current conversion unit and a second actually measured value $i_c$ of an output current of the heat and power module |

| S302 | Determine the second target value $i_{cref}$ of the output current of the heat and power module according to the output power target value $P_{ref}$ and the actually measured value $V_c$ of the terminal voltage |

| S303 | Calculate a third difference between the second target value $i_{cref}$ of the output current of the heat and power module and the second actually measured value $i_c$ of the output current of the heat and power module |

| S304 | Output a third switch transistor control signal to the unidirectional direct current conversion unit according to the third difference |

**FIG. 5**

| S201 | Acquire the initial output power $P_{ref0}$ of the heat and power module and the target heating temperature $T_{ref}$ |

| S202 | Determine a first correction coefficient $k1$ according to the real-time heating temperature $Ty$ and the target heating temperature $T_{ref}$ |

| S203 | Determine the first output power target value $P_{ref1}$ according to the first correction coefficient $k1$ and the initial output power $P_{ref0}$ |

**FIG. 6**

S201 — Acquire the initial output power $P_{ref0}$ of the heat and power module and the target heating temperature $T_{ref}$

S202 — Determine a first correction coefficient k1 according to the real-time heating temperature Ty and the target heating temperature $T_{ref}$

S203 — Determine the first output power target value $P_{ref1}$ according to the first correction coefficient k1 and the initial output power $P_{ref0}$

S204 — Acquire the preset upper limit threshold $Q_{max}$ of the state of charge of the energy storage unit and the preset lower limit threshold $Q_{min}$ of the state of charge of the energy storage unit

S205 — Determine a second correction coefficient k2 according to the real-time state of charge Qy, the preset upper limit threshold $Q_{max}$ of the state of charge, and the preset lower limit threshold $Q_{min}$ of the state of charge

S206 — Determine the second output power target value $P_{ref2}$ according to the second correction coefficient k2 and the first output power target value $P_{ref1}$

**FIG. 7**

| S204 | Acquire the preset upper limit threshold $Q_{max}$ of the state of charge of the energy storage unit and the preset lower limit threshold $Q_{min}$ of the state of charge of the energy storage unit |
| --- | --- |

↓

| S205 | Determine a second correction coefficient k2 according to the real-time state of charge $Q_y$, the preset upper limit threshold $Q_{max}$ of the state of charge, and the preset lower limit threshold $Q_{min}$ of the state of charge |
| --- | --- |

↓

| S207 | Determine a third output power target value $P_{ref3}$ according to the second correction coefficient k2 and the initial output power $P_{ref0}$, and use the third output power target value $P_{ref3}$ as the final output power target value |
| --- | --- |

**FIG. 8**

00

| 20 Calculation unit | → | First switch transistor drive unit (30) | → | Unidirectional direct current conversion unit (02) |
| --- | --- | --- | --- | --- |
| ↑ | | | | |
| 10 Detection unit | 40 → | Second switch transistor drive unit | → | Bidirectional direct current conversion unit (03) |
| | 50 → | Third switch transistor drive unit | → | Inverter unit (05) |

**FIG. 9**

EP 4 362 262 A1

FIG. 10

FIG. 11

21

**FIG. 12**

**FIG. 13**

## INTERNATIONAL SEARCH REPORT

| International application No. |
|---|
| **PCT/CN2021/136625** |

**A. CLASSIFICATION OF SUBJECT MATTER**

H02J 3/24(2006.01)i; H02J 3/46(2006.01)i; H02J 3/28(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

WPI, EPODOC, CNPAT, CNKI: 热电联, 电联热, 微电网, 孤岛, 温度, 荷电, 电荷, 储能, 供热, 供暖, 蓄热, 功率, 电流, 电压, 直流母线, 交流, CHP, micro 1w grid, isolat+, temperature, charge, heating, power, electricity, voltage, DC, bus, AC

**C. DOCUMENTS CONSIDERED TO BE RELEVANT**

| Category* | Citation of document, with indication, where appropriate, of the relevant passages | Relevant to claim No. |
|---|---|---|
| X | CN 110768274 A (NARI-RELAYS ELECTRIC CO., LTD. et al.) 07 February 2020 (2020-02-07)<br>    description, paragraphs [0050]-[0102], and figure 1 | 1-3, 5, 9-10 |
| Y | CN 110768274 A (NARI-RELAYS ELECTRIC CO., LTD. et al.) 07 February 2020 (2020-02-07)<br>    description, paragraphs [0050]-[0102], and figure 1 | 4, 6-8 |
| Y | CN 111864720 A (CASIC FEIHANG TECH RESEARCH INSTITUTE OF CASIA HAIYING MECHANICAL AND ELECTRONIC RESEARCH INSTITUTE et al.) 30 October 2020 (2020-10-30)<br>    description, paragraphs [0047]-[0101], and figures 1-8 | 4 |
| Y | CN 110500176 A (WEICHAI XIGANG NEW ENERGY POWER CO., LTD.) 26 November 2019 (2019-11-26)<br>    description, paragraphs [0043]-[0084], and figures 1-2 | 6-8 |
| X | CN 112383088 A (ZHEJIANG UNIVERSITY et al.) 19 February 2021 (2021-02-19)<br>    description, paragraphs [0023]-[0035], and figures 1-3 | 1-3, 5, 9-10 |
| Y | CN 112383088 A (ZHEJIANG UNIVERSITY et al.) 19 February 2021 (2021-02-19)<br>    description, paragraphs [0023]-[0035], and figures 1-3 | 4, 6-8 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2022** | **15 March 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/136625** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 111987786 A (TIBET NEW ENERGY RESEARCH AND DEMONSTRATION CENTER) 24 November 2020 (2020-11-24)<br>entire document | 1-10 |
| A | US 2018356774 A1 (TSINGHUA UNIVERSITY) 13 December 2018 (2018-12-13)<br>entire document | 1-10 |

**INTERNATIONAL SEARCH REPORT**
Information on patent family members

International application No.

**PCT/CN2021/136625**

| Patent document cited in search report | | | Publication date (day/month/year) | Patent family member(s) | | | Publication date (day/month/year) |
|---|---|---|---|---|---|---|---|
| CN | 110768274 | A | 07 February 2020 | None | | | |
| CN | 111864720 | A | 30 October 2020 | None | | | |
| CN | 110500176 | A | 26 November 2019 | None | | | |
| CN | 112383088 | A | 19 February 2021 | None | | | |
| CN | 111987786 | A | 24 November 2020 | None | | | |
| US | 2018356774 | A1 | 13 December 2018 | WO | 2018153138 | A1 | 30 August 2018 |
| | | | | US | 10620594 | B2 | 14 April 2020 |
| | | | | CN | 106815661 | A | 09 June 2017 |
| | | | | CN | 106815661 | B | 20 October 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110684557